# EUROPÄISCHE PATENTSCHRIFT

(11) **EP 0 437 884 B1**
(45) Veröffentlichungstag und Bekanntmachung des Hinweises auf die Patenterteilung: **22.06.1994**
(21) Anmeldenummer: 90203402.4
(22) Anmeldetag: 18.12.1990
(51) Int. Cl.: H02M 3/335

(54) **Gleichspannungssperrwandler**
DC flyback converter
Convertisseur de tension continu à récupération

(30) Priorität: 18.01.1990 DE 4001324
(43) Veröffentlichungstag der Anmeldung: 24.07.1991
(73) Patentinhaber: Philips Patentverwaltung GmbH, 22335 Hamburg (DE); Philips Electronics N.V., 5621 BA Eindhoven (NL)
(72) Erfinder: Herrmann, Dieter, Dipl.-Ing., W-8541 Büchenbach (DE)
(74) Vertreter: Peuckert, Hermann, Dipl.-Ing.

(56) Entgegenhaltungen:
- ELEKTRONIK INDUSTRIE 1, 1986, Seiten 44-48; J. VERMOLEN et al.: "Kompakte Hochfrequenzoszilloskope erfordern eine effiziente Stromversorgung"
- VALVO TECHNISCHE INFORMATIONEN FÜR DIE INDUSTRIE, Nr. 770415, Hamburg, DE; "Steuer- und Regelschaltung TDA 1060 für Schaltnetzteile"

## Beschreibung

Die Erfindung betrifft einen Gleichspannungssperrwandler mit einer Primärwicklung in Reihe mit der Schaltstrecke eines mit einer Regeleinrichtung verbundenen steuerbaren Schalters, wobei parallel zur Primärwicklung ein erster Kondensator in Reihe mit einer ersten Diode und parallel zur Schaltstrecke eine aus einer ersten Spule, einer zweiten Diode und dem ersten Kondensator gebildete Reihenschaltung liegt.

Für die Versorgung elektronischer Geräte werden Stromversorgungseinrichtungen benötigt, die eine oder mehrere Gleichspannungen liefern. Bei getakteten Gleichspannungswandlern sind insbesondere die Grundtypen Sperrwandler und Durchflußwandler zu unterscheiden. Dabei wird eine z.B. aus der Netzspannung durch Gleichrichtung und Siebung gewonnene Gleichspannung mit Hilfe eines steuerbaren Schalters in eine Rechteckspannung umgewandelt. Diese wird mit Hilfe eines Transformators übertragen, der im Fall des Sperrwandlers auch die Energiespeicherung übernimmt. Anschließend wird gleichgerichtet und gesiebt. Dabei fließt bei einem Sperrwandler nur während der Sperrphase im Sekundärkreis ein Strom.

In dem Aufsatz "Kompakte Hochfrequenzoszilloskope erfordern eine effektive Stromversorgung" in Elektronik Industrie 1, 1986, Seiten 44 bis 48, von J. Vermolen und D. Mellis, ist beschrieben, bei einem getakteten Gleichspannungswandler durch Zuschalten eines Entlastungsnetzwerkes parallel zur Eingangsspannung den Wirkungsgrad zu verbessern. In Bild 5 auf der Seite 46 ist ein Entlastungsnetzwerk gezeigt, das dadurch gebildet wird, daß parallel zur Primärwicklung ein Kondensator in Reihe mit einer Diode und parallel zur Schaltstrecke des steuerbaren Schalters eine Spule, in Reihe mit einer weiteren Diode sowie dem Kondensator liegt. Dabei wird die in der Spule enthaltene Energie über die an die Primärwicklung angeschlossene Diode zur Eingangsspannung zurückgespeist. In Bild 7 auf Seite 46 ist dargestellt, daß mit Hilfe einer an die Ausgangsspannung angeschlossenen Regeleinrichtung die Einschaltdauer des steuerbaren Schalters in Abhängigkeit von Lastschwankungen der Ausgangsspannung regelbar ist. Eine solche von der Sekundärseite angesteuerte Regeleinrichtung ist jedoch mit einem zusätzlichen Leistungsverbrauch verbunden.

Der Erfindung liegt die Aufgabe zugrunde, einen Gleichspannungssperrwandler der eingangs genannten Art zu verbessern. Dabei soll die Ausgangsspannung des Gleichspannungssperrwandlers genau und verlustarm regelbar sein, ohne daß eine sekundärseitige Ansteuerung der Regeleinrichtung benötigt wird.

Diese Aufgabe wird bei einem Gleichspannungssperrwandler der eingangs genannten Art dadurch gelöst, daß mit der Regeleinrichtung ein Meßkreis und ein Abmagnetisierungskreis verbunden sind, wobei in den Meßkreis eine Wicklung des Transformators und in den Abmagnetisierungskreis eine mit der ersten Spule gekoppelte zweite Spule eingeschaltet sind.

Die zweite Spule dient dabei der Abmagnetisierung und transferiert einen Teil der in der ersten Spule gespeicherten Energie in das Abmagnetisierungsnetzwerk, wodurch die Regeleinrichtung zusätzlich zu der durch den Meßkreis bewirkten Ansteuerung angesteuert und so der insbesondere durch den Wicklungswiderstand und den Diodenwiderstand des Sekundärkreises verursachte spannungsabfall der Ausgangsspannung ausgeglichen wird.

Bei einer Ausgestaltungsform ist als Abmagnetisierungsnetzwerk parallel zur zweiten Spule die Parallelschaltung eines ersten Widerstands und eines zweiten Kondensators in Reihe mit einer dritten Diode angeordnet, deren Abgriff über einen zweiten Widerstand an den Ist-Wert-Eingang der Regeleinrichtung angeschlossen ist.

Aus der zweiten Spule, der dritten Diode und dem zweiten Kondensator wird ein "parasitärer Sperrwandlerkreis" gebildet, der bewirkt, daß der zweite Kondensator geladen wird, wodurch sich am parallelliegenden ersten Widerstand eine Spannung aufbaut. Dadurch kommt es zu einem Stromfluß durch die aus dem ersten und zweiten Widerstand gebildete Reihenschaltung, was zur Folge hat, daß am Ist-Wert-Eingang der Regeleinrichtung eine Spannung anliegt, die gegenüber einem Gleichspannungswandler ohne Abmagnetisierungnetzwerk eine Kompensation der vom sekundärseitigen Wicklungs- und Diodenwiderstand verursachten Schwankungen bewirkt, ohne daß die Regeleinrichtung von der Sekundärseite angesteuert wird. Insgesamt ergibt sich somit die Einsparung einer potentialüberbrückenden Regelschleife, die insbesondere bei Gleichspannungswandlern für kleine Leistungen 5W, beispielsweise für ISDN-Endgeräte, zu Energieverbrauchsproblemen führen würde.

Weitere vorteilhafte Ausgestaltungsformen sind in den Unteransprüchen enthalten.

Im folgenden wird die Erfindung anhand der in den Figuren dargestellten Ausführungbeispiele näher erläutert.

Die Figur 1 zeigt ein erstes Ausführungsbeispiel eines Gleichspannungssperrwandlers.

Die Figur 2 zeigt schematische Spannungs- und Stromverläufe eines Gleichspannungssperrwandlers.

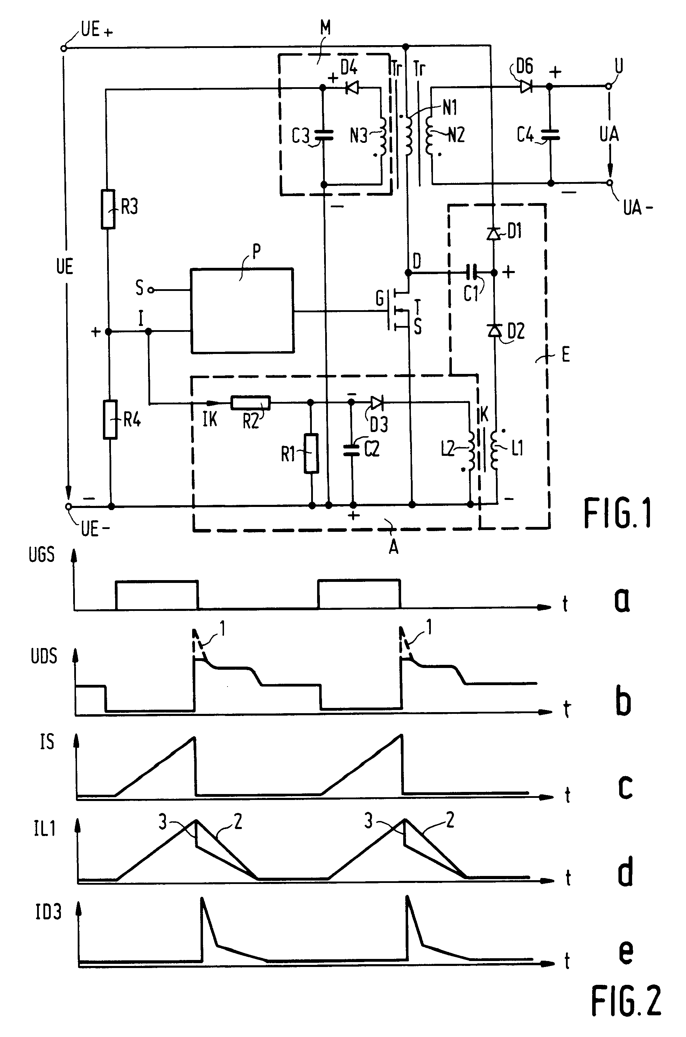

Der in der Fig. 1 dargestellte Gleichspannungssperrwandler weist einen Primärkreis auf, mit einer zwischen einem positiven Potential UE+ und einem gegenüber diesem negativen Potential UE- anliegenden Eingangsspannung UE. Parallel zur Eingangsspannung UE liegt eine Primärwicklung N1 eines Transformators Tr in Reihe mit der Schaltstrecke eines als selbstsperrender N-Kanal MOS Feldeffekttransistor ausgebildeten steuerbaren Schalters T, dessen Source-Elektrode an das negative Potential UE- der Eingangsspannung UE angeschlossen ist. Die Gate-Elektrode des Feldeffekttransistors T ist an den Ausgang einer als Pulsbreitenmodulator ausgebildeten Regeleinrichtung P angeschlossen, die eingangsseitig einen Ist-Wert-Eingang I und einen Soll-Wert-Eingang S besitzt. Der Transformator Tr weist eine weitere Wicklung N3 eines Meßkreises M auf. Die Anschlußklemmen der Wicklung N3 sind über die Reihenschaltung einer vierten Diode D4 und eines dritten Kondensators C3 miteinander verbunden, wobei der gemeinsame Abgriff über einem dritten Widerstand R3 an den Ist-Wert-Eingang I des Pulsbreitenmodulators P angeschlossen ist. Darüber hinaus ist der Ist-Wert-Eingang I des Pulsbreitenmodulators P über einen vierten Widerstand R4 mit dem negativen Potential UE- der Eingangsspannung UE verbunden. Parallel zur Eingangsspannung UE liegt zwischen dem positiven Potential UE+ und dem negativen Potential UE- ein Entlastungsnetzwerk E. Dazu ist parallel zur Schaltstrecke des Feldeffekttransistors T die Reihenschaltung einer ersten Spule L1, einer zweiten Diode D2 und eines ersten Kondensators C1 angeordnet, wobei der gemeinsame Abgriff des ersten Kondensators C1 und der zweiten Diode D2 über eine erste Diode D1 an das positive Potential UE+ der Eingangsspannung UE angeschlossen ist. Die erste Spule L1 ist über einen gemeinsamen Kern K mit einer zweiten Spule L2 gekoppelt, die einerseits an das negative Potential UE- und über die Reihenschaltung einer dritten Diode D3 und eines zweiten Widerstands R2 an den Ist-Wert-Eingang I des Pulsbreitenmodulators P angeschlossen ist, wobei der gemeinsame Abgriff des zweiten Widerstands R2 und der dritten Diode D3 über die Parallelschaltung eines ersten Widerstands R1 und eines zweiten Kondensators C2 mit dem negativen Potential UE- der Eingangsspannung UE verbunden ist. Der Sekundärkreis des getakteten Gleichspannungssperrwandlers weist bei dem in der Fig. 1 dargestellten Ausführungsbeispiel eine Sekundärwicklung N2 des Transformators Tr auf. In Reihe zur Sekundärwicklung N2 ist eine sechste Diode D6 angeordnet, wobei parallel zu der aus der Sekundärwicklung N2 und der sechsten Diode D6 gebildeten Reihenschaltung ein vierter Kondensator C4 liegt. An den Ausgangsklemmen mit einem positiven Potential UA+ und einem gegenüber diesem negativen Potential UA- parallel zum vierten Kondensator C4 liegt eine Ausgangsspannung UA.

Während der Leitphase des Feldeffekttransistors T sperrt die sechste Diode D6 und an der Primärwicklung N1 des Transformators Tr liegt die Eingangsspannung UE an. Während der Sperrphase des Feldeffekttransistors T wird die sechste Diode D6 leitend und es wird die während der leitenden Phase von dem Transformator Tr aufgenommene Energie über die sechste Diode D6 an den vierten Kondensator C4 abgegeben und so die Ausgangsspannung UA erzeugt. Der Feldeffekttransistor T wird dabei durch Impulse gesteuert, die in ihrer Breite in Abhängigkeit von Lastschwankungen moduliert werden. Die Impulse werden von dem Pulsbreitenmodulator P erzeugt und an die Steuerelektrode (Gate) des Feldeffekttransistors T gelegt. Über die weitere Wicklung N3 des Transformators Tr wird eine Spannung abgegriffen, die ein Maß für das Verhalten der Ausgangsspannung UA darstellt. Diese wirkt, insbesondere bei Lastschwankungen, als Regelkriterium auf den Ist-Wert-Eingang I des Pulsbreitenmodulators P ein, ohne daß jedoch der Wicklungswiderstand der Sekundärwicklung N2 und die Durchlaßspannung der sechsten Diode D6 in die Regelschleife einbezogen werden. Am Sollwerteingang S liegt eine vorgebbare Referenzspannung.

Ist der Feldeffekttransistor T gesperrt, so liegt an der Drain-Elektrode D des Feldeffekttransistors T eine Spannung, die sich aus der Summe der Eingangsspannung UE und einer an der Primärwicklung N1 anliegenden Spannung zusammensetzt, die auch eine durch die Streuinduktivität zwischen Primär- und Sekundärwicklung erzeugte Überspannungsspitze aufweist. Diese wird über den ersten Kondensator C1 und die erste Diode D1 zur Eingangsspannung UE zurückgespeist (Fig. 2). Wird der Feldeffekttransistor T wieder leitend, so liegt der erste Kondensator C1 parallel zur Serienschaltung der zweiten Diode D2 und der ersten Spule L1. Die erste Spule L1 wird nun von der im ersten Kondensator C1 gespeicherten Energie geladen. Daraus resultiert ein rampenförmiger Stromanstieg in der ersten Spule L1, der durch das Sperren des Feldeffekttransistors T wieder beendet wird. Die zweite Spule L2 wirkt als Abmagnetisierungsspule und bewirkt, daß ein Teil der in der ersten Spule L1 gespeicherten Energie über die dritte Diode D3 in den zweiten Kondensator C2 geladen wird, wodurch sich am ersten Widerstand R1 eine negative Spannung aufbaut. Dadurch wird der erste Widerstand R1 in Reihe mit dem zweiten Widerstand R2 dem vierten Widerstand R4 parallelgeschaltet. Damit kommt es zu einem Stromfluß eines Stromes IK durch die Reihenschaltung des ersten und zweiten Widerstandes R1, R2, wodurch am Ist-Wert-Eingang I des Pulsbreitenmodulators P eine Spannung anliegt, die verglichen mit der Ist-Wert-Spannung ohne Abmagnetisierungsnetzwerk A um das Produkt des Stromes IK und der Summe des ersten und zweiten Widerstandes R1, R2 verringert ist. Somit wird dem Ist-Wert-Eingang I des Pulsbreitenmodulators P eine "zu kleine Ausgangsspannung UA" vorgetäuscht. Als Folge davon wird die Einschaltdauer des Feldeffekttransistors T verlängert und der vom Wicklungswiderstand der Sekundärwicklung N2 und dem Diodenwiderstand der sechsten Diode D6 verursachten Verluste der Ausgangsspannung UA wieder ausgeglichen.

Bei einer in der Figur 1 nicht dargestellten Ausführungsform liegt in Reihe zur Parallelschaltung aus dem ersten Widerstand R1 und dem zweiten Kondensator C2 eine mit dem negativen Pol UE- zur Eingangsspannung UE verbundene Gleichspannungsquelle. Die Gleichspannungsquelle bewirkt eine Kompensation einer am zweiten Kondensator C2 anliegenden Offsetspannung.

Die Fig. 2 zeigt qualitative Spannungs- und Stromverläufe einer Steuerspannung UGS zwischen Gate-und Source-Elektrode des Feldeffekttransistors T, einer Spannung UDS, die an der Schaltstrecke des Feldeffekttransistors T anliegt, eines Stromes IS an der Source-Elektrode des Feldeffekttransistors T, eines Stromes IL1 durch die erste Spule L1 und eines durch die dritte Diode D3 fließenden Stromes ID3. Die Fig. 2a zeigt die zwischem dem Gate- und der Source-Elektrode des selbstsperrenden N-Kanal-MOS-Feldeffekttransistors T anliegende Steuerspannung UGS. Dabei nimmt die Steuerspannung UGS im Leitzustand des Feldeffekttransistors T von Null verschiedene Werte an, während sie im Sperrzustand zu Null wird. Die in Fig. 2b dargestellte Spannung UDS an der Schaltstrecke des Feldeffekttransistors T wird in dessen Leitzustand 0 und nimmt in dessen Sperrzustand von Null verschiedene Werte an. Dabei setzt sich der Spannungsverlauf aus der Summe der Eingangsspannung UE und der Rückschlagsspannung an der Primärwicklung N1 des Transformators Tr zusammen. Ohne das Vorhandensein des Entlastungsnetzwerkes E würde die Spannung UDS außerdem eine im Spannungsverlauf in der Fig. 2b gestrichelt dargestellte Überspannungsspitze 1 aufweisen. Diese wird beim Vorhandensein des Entlastungsnetzwerkes E jedoch über den Kondensator C3 durch die Diode D4 zum positiven Potential UE+ der Eingangsspannung UE zurückgespeist, so daß sich für das in der Fig. 1 dargestellte Ausführungsbeispiel eines Gleichspannungssperrwandlers ein Spannungsverlauf UDS ohne Überspannungsspitze 1 ergibt. Im Sperrzustand des Feldeffekttransistors T erfolgt kein Stromfluß des in der Fig. 2c dargestellten Stromverlaufes des Stromes IS von der Source-Elektrode zum negativen Potential UE- der Eingangsspannung UE, während es im Leitzustand des Feldeffekttransistors T zu einem rampenförmigen Stromanstieg kommt, der durch das Sperren des Feldeffekttransistors T wieder auf Null abnimmt. Ebenso erfolgt im Sperrzustand durch die erste Spule L1 kein Stromfluß des in der Fig. 2d dargestellten Stromes IL1. Im leitenden Zustand des Feldeffekttransistors T kommt es ebenso wie beim Strom IS zu einem Anstieg des Stromes IL1, der beim Sperren des Feldeffekttransistors T jedoch nicht zu Null wird, sondern aufgrund der im Kern K der ersten Spule L1 gespeicherten Energie dadurch abnimmt, daß die in der Spule L gespeicherte Energie über die aus der ersten und zweiten Diode D1 und D2 gebildete Reihenschaltung zum positiven Pol UE+ der Eingangsspannung UE abgeleitet wird. Dabei stellt sich ohne die zweite Spule L2 ein rampenförmiger Stromverlauf 2 ein. Weist der getaktete Gleichspannungssperrwandler jedoch entsprechend dem in der Fig. 1 dargestellten Ausführungsbeispiel das Abmagnetisierungsnetzwerk A mit der zweiten Spule L2 auf, so wirkt diese als Abmagnetisierungsspule, die einen Teil der im Kern K gespeicherten Energie über die dritte Diode D3 zum Laden des zweiten Kondensators C2 aufbringt. Damit stellt sich der in der Fig. 2d dargestellte Stromverlauf 3 des Stromes IL1 ein. Damit ergibt sich der in der Fig. 2e dargestellte Sromverlauf des durch die dritte Diode D3 fließenden Stromes ID3. Im Leitzustand des Feldeffekttransistors T erfolgt kein Stromfluß des Stromes ID3, während sich im Leitzustand des Feldeffekttransistors T ein Stromfluß einstellt, der sich aus der Überlagerung des sich aus der Überlagerung eines sich aus der in Fig. 2b dargestellten Überspannungsspitze 1 ergebenden Stromes und dem aus dem in der Fig. 2d dargestellten Stromfluß 3 des Stromes IL1 zusammensetzt.

## Patentansprüche

1. Gleichspannungssperrwandler mit einer Primärwicklung in Reihe mit der Schaltstrecke eines mit einer Regeleinrichtung verbundenen steuerbaren Schalters (T), wobei parallel zur Primärwicklung ein erster Kondensator (C1) in Reihe mit einer ersten Diode (D1) und parallel zur Schaltstrecke eine aus einer ersten Spule (L1), einer zweiten Diode (D2) und dem ersten Kondensator (C1) gebildete Reihenschaltung liegt,
dadurch gekennzeichnet,
daß mit der Regeleinrichtung (P) ein Meßkreis (M) und ein Abmagnetisierungskreis (A) verbunden sind, wobei in den Meßkreis (M) eine Wicklung (N3) des Transformators (Tr) und in den Abmagnetisierungskreis (A) eine mit der ersten Spule (L1) gekoppelte zweite Spule (L2) eingeschaltet sind.

2. Gleichspannungssperrwandler nach Anspruch 1,
dadurch gekennzeichnet,
daß als Abmagnetisierungsnetzwerk (A) parallel zur zweiten Spule (L2) die Parallelschaltung aus einem ersten Widerstand (R1) und einem zweiten Kondensator (C2) in Reihe mit einer dritten Diode (D3) angeordnet ist, deren Abgriff über einen zweiten Widerstand (R2) an den Ist-Wert-Eingang (I) der Regeleinrichtung (P) angeschlossen ist.

3. Gleichspannungssperrwandler nach einem der Ansprüche 1 oder 2,
dadurch gekennzeichnet,
daß in der Reihe zur Parallelschaltung aus dem ersten Widerstand (R1) und dem zweiten Kondensator (C2) eine Gleichspannungsquelle liegt.

4. Gleichspannungssperrwandler nach einem der Ansprüche 1 bis 3,
dadurch gekennzeichnet,
daß als Meßkreis (M) parallel zur weiteren Wicklung (N3) eine vierte Diode (D4) in Reihe mit einem dritten Kondensator (C3) liegt, wobei dem dritten Kondensator (C3) ein Spannungsteiler (R3, R4) parallelgeschaltet ist, dessen Abgriff an den Ist-Wert-Eingang (I) der Regeleinrichtung (P) angeschlossen ist.

5. Gleichspannungssperrwandler nach einem der Ansprüche 1 bis 4,
dadurch gekennzeichnet,
daß die Spulen (L1, L2, L3) einen mit Luftspalt versehenen Kern (K) aufweisen.

6. Gleichspannungssperrwandler nach einem der Ansprüche 1 bis 4,
dadurch gekennzeichnet,
daß die Regeleinrichtung (P) als Pulsbreitenmodulator ausgebildet ist.

## Claims

1. A DC flyback converter having a primary winding connected in series with the switching path of a controllable switch (T) connected to a control device, a first capacitor (C1) in series with a first diode (D1) being connected in parallel with the primary winding and a series circuit formed from a first coil (L1), a second diode (D2) and the first capacitor (C1) being connected in parallel with the switching path, characterized in that a measuring circuit (M) and a demagnetisation circuit (A) are connected to the control device (P), a winding (N3) of the transformer (Tr) being connected into the measuring circuit (M) and a second coil (L2), coupled to the first coil (L1), being connected into the demagnetisation circuit (A).

2. A DC flyback converter as claimed in Claim 1, characterized in that the parallel circuit of a first resistor (R1) and of a second capacitor (C2) in series with a third diode (D3) is arranged in parallel with the second coil (L2) as the demagnetisation network (A), the tap of said parallel circuit being connected, via a second resistor (R2), to the actual-value input (I) of the control device (P).

3. A DC flyback converter as claimed in one of the Claims 1 or 2, characterized in that a DC source is connected in series with the parallel circuit of the first resistor (R1) and the second capacitor (C2).

4. A DC flyback converter as claimed in any one of the Claims 1 to 3, characterized in that a fourth diode (D4) in series with a third capacitor (C3) is connected in parallel with the further winding (N3) as the measuring circuit (M), a voltage divider (R3, R4), whose tap is connected to the actual-value input (I) of the control device (P), being connected in parallel with the third capacitor (C3).

5. A DC flyback converter as claimed in any one of the Claims 1 to 4, characterized in that the coils (L1, L2, L3) have a core (K) provided with an air gap.

6. A DC flyback converter as claimed in any one of the Claims 1 to 4, characterized in that the control device (P) is constructed as pulse-width modulator.

## Revendications

1. Convertisseur continu-continu à blocage ayant un enroulement primaire monté en série avec le trajet de commutation d'un commutateur commandable (T) relié à un dispositif de réglage, le montage série d'un premier condensateur (1) et d'une première diode (D1) étant disposé en parallèle avec l'enroulement primaire et le montage série d'une première bobine (L1), d'une deuxième diode (D2) et du premier condensateur (1) étant disposé en parallèle avec le trajet de commutation, caractérisé en ce qu'au dispositif de réglage (P) sont reliés un circuit de mesure (M) et un circuit de désaimantation (A), un enroulement (N3) du transformateur (Tr) étant inséré dans le circuit de mesure (M) et une deuxième bobine (L2), couplée à la première bobine (L1) étant insérée dans le circuit de désaimantation (A).

2. Convertisseur continu-continu à blocage selon la revendication 1, caractérisé en ce que, comme réseau de désaimantation (A), le montage parallèle d'une première résistance (R1) et d'un deuxième condensateur (C2) en série avec une troisième diode (D3) est disposé en parallèle avec la deuxième bobine (L2), montage parallèle dont la prise est reliée à travers une deuxième résistance (R2) à l'entrée de valeur effective (I) du dispositif de réglage (P).

3. Convertisseur continu-continu à blocage selon la revendication 1 ou 2, caractérisé en ce que, en série avec le montage parallèle de la première résistance (R1) et du deuxième condensateur (C2), est disposée une source de tension continue.

4. Convertisseur continu-continu à blocage selon l'une des revendications 1 à 3, caractérisé en ce que, comme circuit de mesure (M), le montage série d'une quatrième diode (D4) et d'un troisième condensateur (C3) est disposé en parallèle avec l'autre enroulement (N3) , un diviseur de tension (R3, R4) étant disposé en parallèle avec le troisième condensateur (C3), diviseur de tension dont la prise est raccordée à l'entrée de valeur effective (I) du dispositif de réglage (P).

5. Convertisseur continu-continu à blocage selon l'une des revendications 1 à 4, caractérisé en ce que les bobines (L1, L2, L3) présentent un noyau (K) pourvu d'un entrefer.

6. Convertisseur continu-continu à blocage selon l'une des revendications 1 à 4, caractérisé en ce que le dispositif de réglage (P) est réalisé sous la forme d'un modulateur de largeur d'impulsion.
